# EUROPÄISCHE PATENTANMELDUNG

(11) **EP 1 241 756 A2**
(43) Veröffentlichungstag der Anmeldung: **18.09.2002**
(21) Anmeldenummer: 02360044.8
(22) Anmeldetag: 29.01.2002
(51) Int. Cl.: H02G 1/08, G02B 6/44

(54) **Verfahren zur Installation von Kabeln und Kabel zur Installation in einer Trinkwasserleitung**

(30) Priorität: 24.02.2001 DE 10109114
(71) Anmelder: ALCATEL, 75008 Paris (FR)
(72) Erfinder: Nothofer, Klaus, 40699 Erkrath (DE); Lysson, Hans-Jürgen, 41352 Korschenbroich (DE); Leppert, Hans-Detlef, Dr., 41189 Mönchengladbach (DE); Teschner, Wolfgang, 31515 Wunstorf (DE)
(74) Vertreter: Brose, Gerhard

(57) **Zusammenfassung**

Die Erfindung betrifft ein Verfahren zur Installation von Kabeln, insbesondere Glasfaserkabeln in Trinkwasserleitungen sowie ein zur Trinkwasserleitungsmontage geeignetes Kabel. Um die Verschmutzung des Kabels zu vermeiden und eine Kontamination des Trinkwassers auszuschließen, ist vorgesehen, dass das Kabel mit einer Schutzhülle ummantelt wird, die vor der Berührung mit dem Trinkwasser abgestreift wird. Ein dazu geeignetes Kabel kann bereits während seines Herstellungsprozesses mit der abstreifbaren Schutzhülle ummantelt werden.

## Beschreibung

Die Erfindung betrifft ein Verfahren zur Installation von Kabeln, insbesondere Glasfaserkabeln, in Trinkwasserleitungen gemäß Anspruch 1 sowie ein Kabel gemäß dem Oberbegriff des Anspruchs 5.

Für die Verlegung von Kabeln aller Art müssen alle Möglichkeiten genutzt werden, insbesondere wenn auf bereits vorhandene Kanäle oder Rohrleitungen zurückgegriffen werden kann. Auch Trinkwasserleitungen sind prinzipiell zur Kabelmontage geeignet. Aus hygienischen und gesundheitlichen Gründen ist dabei jedoch strengstens darauf zu achten, dass das zu verlegende Kabel sehr hohen Sterilitätsanforderungen genügt. Jedwede Verschmutzungen der Kabeloberfläche, die durch den Herstellungsprozess, die Lagerung oder die Montage innerhalb der Wasserleitung hervorgerufen werden können, sind unzulässig. Eine Montageerlaubnis durch das Wasserwerk setzt die zuverlässige Einhaltung entsprechender Hygienestandards voraus. Eine Säuberung des Kabels unmittelbar vor der Berührung mit dem Trinkwasser genügt diesen Anforderungen nicht in jedem Fall. Durch die Art des Säuberungsvorganges können nur spezifische Verschmutzungen entfernt werden. Es kommt aber darauf an, sowohl Staub- und Fettreste als auch beispielsweise montagebedingte Öl-, Farb- oder sonstige Verunreinigungen zu entfernen.

Der Erfindung liegt die Aufgabe zugrunde, ein Verfahren der gattungsgemäßen Art anzugeben, das sich durch zuverlässigen Säuberungseffekt bei jeglicher Art von Verschmutzung auszeichnet.

Die Aufgabe wird mit den kennzeichneten Merkmalen des Anspruchs 1 gelöst. Durch die temporäre Schutzhülle ergibt sich auf einfache Weise ein sicherer Reinigungseffekt. Dabei spielt die Art der Verunreinigung keine Rolle. Letztlich kann aufgrund der Ummantelung auf Vorbeugemaßnahmen zur Verhinderung der Anschmutzung des Kabels verzichtet werden. Das Kabel wird vorzugsweise bereits während seiner Herstellung mit der entfernbaren Schutzhülle ummantelt, so dass ein Schutz auch während der Lagerung, dem Transport oder anderer Zwischenschritte bis hin zum Montagevorgang in das Wasserrohr garantiert werden kann. Die adhäsive Wirkung zwischen der Kabeloberfläche und der Schutzhülle sollte eine enganliegende Ummantelung ermöglichen aber derart schwach sein, dass ein Verkleben und damit schlechte Entfernbarkeit vermieden wird.

Gemäß Anspruch 2 wird ein Extrudierverfahren zum Aufschrumpfen einer dünnen, filmartigen Plastikhaut auf das Kabel eingesetzt. Auf diese Weise ergibt sich eine enganliegende Ummantelung, die nicht mit der Kabeloberfläche verklebt.

Es ist aber auch möglich, wie in Anspruch 3 angegeben, eine schmalstreifige Plastikhaut in Längsrichtung um das Kabel herumzulegen, wobei eine geringfügige Überlappung der Längsseiten vorgesehen ist.

Um das Entfernen der Schutzhülle zu erleichtern, wird die Schutzhülle gemäß Anspruch 4 mit Aufreißhilfen versehen. Diese könnten durch Überlappungsbereiche einzelner Ummantelungsabschnitte oder durch Aufreißlaschen realisiert werden. Überlappungsbereiche können bei schlauchartigen Ummantelungen an den Schlauchöffnungen vorgesehen sein. Bei Ummantelungen gemäß Anspruch 3 können aber auch die bereits vorhandenen in Kabellängsrichtung verlaufenden Überlappungen dafür genutzt werden.

Ein Kabel, insbesondere Glasfaserkabel, das zur Installation in einer Trinkwasserleitung vorgesehen ist, kann gemäß Anspruch 5 mit einer entfernbaren Schutzhülle ausgestattet sein. Diese Schutzhülle wird vorzugsweise bereits im Rahmen des Herstellungsverfahrens des Kabels berücksichtigt.

## Patentansprüche

1. Verfahren zur Installation von Kabeln, insbesondere Glasfaserkabeln, in Trinkwasserleitungen,
**dadurch gekennzeichnet,**
**dass** das Kabel mit einer Schutzhülle ummantelt wird, die vor der Berührung mit dem Trinkwasser abgestreift wird.

2. Verfahren nach Anspruch 1,
**dadurch gekennzeichnet,**
**dass** die Ummantelung erfolgt, indem eine Plastikhaut auf die Kabeloberfläche extrudiert wird.

3. Verfahren nach Anspruch 1,
**dadurch gekennzeichnet,**
**dass** die Ummantelung erfolgt, indem eine streifenförmige Plastikhaut sich überlappend um das Kabel longitudinal herumgelegt wird.

4. Verfahren nach einem der vorangehenden Ansprüche,
**dadurch gekennzeichnet,**
**dass** die Schutzhülle mit Aufreißhilfen versehen wird.

5. Kabel, insbesondere Glasfaserkabel, zur Installation in einer
Trinkwasserleitung,
**gekennzeichnet durch** eine abstreifbare Schutzhülle.
